# EUROPEAN PATENT APPLICATION

(11) **EP 3 709 629 A1**
(43) Date of publication of application: **16.09.2020**
(21) Application number: 19189213.2
(22) Date of filing: 30.07.2019
(51) Int. Cl.: H04N 5/235

(54) **SYSTEM AND METHOD FOR IMAGE DISPLAYING**

(30) Priority: 12.03.2019 TW 108108270
(71) Applicant: Cal-Comp Big Data, Inc., New Taipei City 22201 (TW)
(72) Inventor: LI, Jui-Che, 22201 New Taipei City (TW)
(74) Representative: Emde, Eric

(57) **Abstract**

A system and a method for image displaying are provided. A first electronic device activates a fill light to fill a subject. The first electronic device determines whether the illuminance of the subject is greater than a first threshold. If not, the first electronic device increases the brightness of the fill light. If yes, the first electronic device captures the subject by the image capturing circuit to obtain first color data, and transmits the first color data to a second electronic device. The second electronic device corrects the first color data and converts the corrected first color data into second color data in a color domain, and displays the subject according to the second color data.

## Description

### BACKGROUND OF THE INVENTION

### [Field of the Invention]

The invention relates to a system and a method for image displaying.

### [Description of Related Art]

On the data of skin color and color of cosmetics, generally, color data with red, green, blue, and a clean value is typically obtained through a RGB sensor. In the conventional application, only an error value of the color data is calculated to determine the color change. However, this method leads to the following issues: (1) because of the process variation of the RGB sensor, the error range of the color data obtained by different sensor is greater. (2) the RGB sensor is affected by a surface material, and a correct RGB color domain is failed to be obtained.

### SUMMARY OF THE INVENTION

The invention provides a system and a method for image displaying, which can reduce the error caused by the RGB sensor in the process. In addition, by correcting the color shift coefficient, it is possible to reduce the influence of the surface material to obtain a more accurate RGB color domain.

The invention provides a system for image displaying. The image displaying system includes a first electronic device, and a second electronic device. The first electronic device includes an image capturing circuit. The second electronic device includes a display. The first electronic device activates a fill light to fill a subject. The first electronic device determines whether an illuminance of the subject is greater than a first threshold. When the illuminance of the subject is not greater than the first threshold, the first electronic device increases a brightness of the fill light, and repeatedly performs the operation of determining whether the illuminance of the subject is greater than the first threshold. When the illuminance of the subject is greater than the first threshold, the first electronic device captures the subject by the image capturing circuit to obtain a first color data, and transmits the first color data to the second electronic device. The second electronic device corrects the first color data, and converts the corrected first color data into second color data in the color domain, and displays the subject according to the second color data.

The invention provides an image displaying method for an image displaying system. The image displaying system includes a first electronic device and a second electronic device. The first electronic device includes an image capturing circuit. The second electronic device includes a display. The following are included in the method. A subject is filled by the first electronic device activating a fill light. Whether an illuminance of the subject is greater than the first threshold is determined by the first electronic device. When the illuminance of the subject is not greater than the first threshold, the first electronic device increases a brightness of the fill light by the first electronic device, and repeatedly performs the step of determining whether the illuminance of the subject is greater than the first threshold. When the illuminance of the subject is greater than the first threshold, the subject is captured to obtain a first color data by the image capturing circuit of the first electronic device. In addition, the first color data is transmitted to the second electronic device by the first electronic device. Furthermore, the corrected first color data is converted to a second color data in a color domain by the second electronic device correcting the first color data. Moreover, the subject is displayed according to the second color data.

In view of the above, a system and a method for image displaying of this invention automatically increase the brightness of the fill light when the illuminance of the subject is not enough. Besides, in the processing of the image correction, the color data may be corrected according to the color shift coefficient so that the corrected color data is close to the color of the target related to the color shift coefficient. For example, the corrected first color data may be closer to true skin color or the color of the cosmetics. According to the above, the error caused by manufacturing of the RGB sensor may be reduced, and by correcting the color shift coefficient, the influence of the surface material may be reduced to obtain a more accurate RGB color domain.

To provide a further understanding of the aforementioned and other features and advantages of the disclosure, exemplary embodiments, together with the reference drawings, are described in detail below.

### BRIEF DESCRIPTION OF THE DRAWINGS

FIG. 1 is a schematic diagram of an image displaying system according to an embodiment of the invention.
FIG. 2 is a flowchart of an image displaying method according to an embodiment of the invention.

### DESCRIPTION OF THE EMBODIMENTS

The accompanying drawings are included to provide a further understanding of the invention, and are incorporated in and constitute a part of this specification. The drawings illustrate embodiments of the invention and, together with the description, serve to explain the principles of the invention.

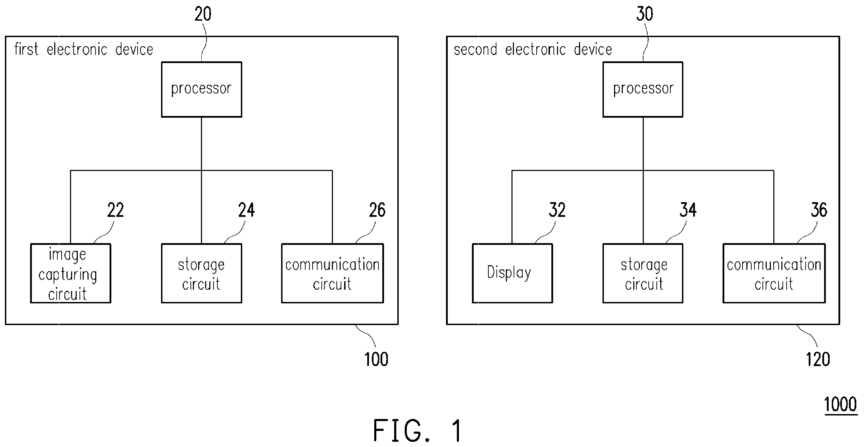

FIG. 1 is a schematic diagram of an image displaying system according to an embodiment of the invention.

Please refer to FIG. 1. An image displaying system 1000 includes a first electronic device 100 and a second electronic device 120. The first electronic device 100 and the second electronic device 120 perform wired or wireless communication with each other.

The first electronic device 100 includes a processor 20, an image capturing circuit 22, a storage circuit 24, and a communication circuit 26. The image capturing circuit 22, the storage circuit 24, and the communication circuit 26 are respectively coupled to the processor 20.

The processor 20 may be a central processing unit (CPU), or other programmable microprocessor for general purpose or special purpose, a digital signal processor (DSP), a programmable controller, an application specific integrated circuit (ASIC) or other similar components or combinations of the above components.

The image capturing circuit 22 is, for example, a camera adopting charge coupled device (CCD) lens, complementary metal oxide semiconductor transistors (CMOS) lens, or an infrared lens video recorder or camera. In this embodiment, the image capturing circuit 22 is a RGB sensor.

The storage circuit 24 may be any type of fixed or removable random access memory (RAM), read-only memory (ROM), flash memory, or similar components or combinations of the above components.

The communication circuit 26 may be a global system for mobile communication (GSM), a personal handy-phone system (PHS), a code division multiple access (CDMA) system, a wideband code division multiple access (WCDMA) system, a long term evolution (LTE) system, a worldwide interoperability for microwave access (WiMAX) system, a wireless fidelity (Wi-Fi) system or a Bluetooth signal transmission component.

In this embodiment, a plurality of code segments are stored in the storage circuit 24 of the first electronic device 100. After the above code segment is installed, it is executed by the processor 20. For instance, the storage circuit 24 includes a plurality of modules. Each operation applied to the first electronic device 100 in the image display system 1000 are respectively performed by the modules. Each module is composed of one or more code segments. However, the invention is not limited thereto. Each operation applied to the first electronic device 100 may also be achieved by other hardware forms.

The second electronic device 120 includes a processor 30, a display 32, a storage circuit 34, and a communication circuit 36. The display 32, the storage circuit 34, and the communication circuit 36 are respectively coupled to the processor 30.

Since the processor 30, the storage circuit 34, and the communication circuit 36 may respectively be components similar to the aforementioned processor 20, the storage circuit 24 and the communication circuit 26, which shall not be repeated herein.

The display 32 may be a display providing display function in the display domain of the second electronic device 120. The display 32 may be a display providing the display function, such as a liquid crystal display (LCD), a light-emitting diode (LED), a field emission display (FED), and so on.

In this embodiment, a plurality of code segments are stored in the storage circuit 34 of the second electronic device 120. After the above code segment is installed, it is executed by the processor 30. For instance, the storage circuit 34 includes a plurality of modules. Each operation applied to the second electronic device 120 in the image display system 1000 are respectively performed by the modules. Each module is composed of one or more code segments. However, the invention is not limited thereto. Each operation applied to the first electronic device 120 may also be achieved by other hardware forms.

In particular, the first electronic device 100 may be an electronic device such as a mobile phone having video recording function, a tablet, a notebook computer or a digital camera. However, the invention is not limited thereto. The second electronic device 120 may be an electronic device such as a mobile phone having a display function, a tablet, a notebook computer or a screen, which is not limited thereto.

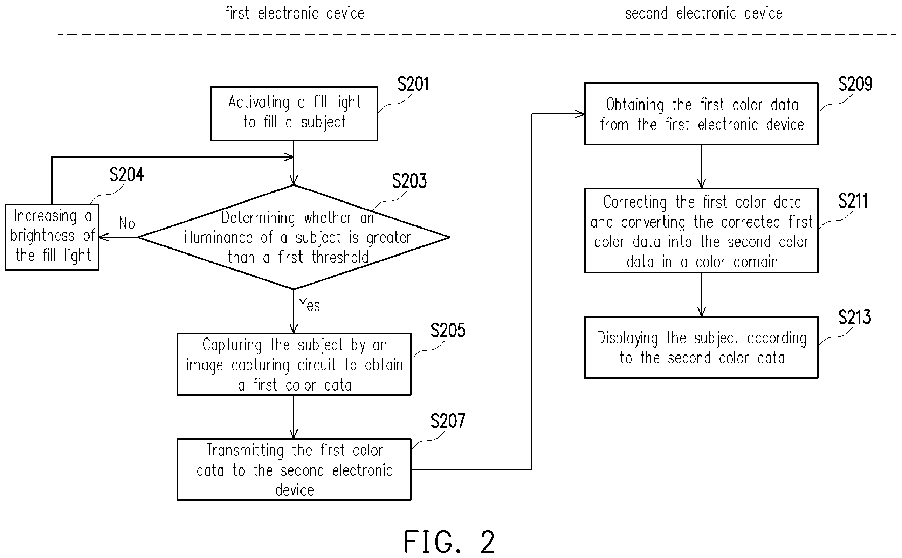

FIG. 2 is a flowchart of an image displaying method according to an embodiment of the invention.

Please refer to FIG. 2. First, after the first electronic device 100 activates a fill light built in or external to the first electronic device 100 to fill a subject to fill (Step S201), the first electronic device 100 determines whether an illuminance of a subject is greater than a first threshold (Step S203). For example, the first electronic device 100 may obtain a live view image captured by the image capturing circuit 22, and determine whether the illuminance or (the brightness) of the image is greater than the first threshold.

When the illuminance of the subject is not greater than the first threshold, the first electronic device 100 increases a brightness of the fill light (Step S204), repeatedly performs the aforementioned Step S203.

When the illuminance of the subject is greater than the first threshold, the first electronic device 100 captures the aforementioned subject by the image capturing circuit 22 to obtain a first color data of the aforementioned subject (Step S205), and transmit the first color data to the second electronic device 120 (Step S207).

Afterwards, the second electronic device 120 obtains the aforementioned first color data from the first electronic device 100 (Step S209). The second electronic device 120 corrects the first color data and converts the corrected first color data into the second color data in a color domain (step S211).

In detail, before the first electronic device 100 having the image capturing circuit 22 is delivered, the sensing range of the image capturing circuit 22 of the first electronic device 100 is obtained through a process for color card capturing (for example, the value range of the color that can be sensed). In addition, the first electronic device 100 and the second electronic device 120 are connected before data transmission. In the connecting process, the second electronic device 120 obtains the sensing range of the image capturing circuit 22 of the first electronic device 100. In addition, a first correcting parameter is calculated and obtained according to the sensing range. Afterwards, the second electronic device 120 corrects the aforementioned first color according to the first correcting parameter so that the corrected first color data is close to a color range of a color card.

Besides, in one embodiment, the second electronic device 120 may further correct the foregoing first color data according to the first color shift coefficient in step S211, so that the corrected first color data is close to a color of a target related to the first color shift coefficient. In this embodiment, the aforementioned first color shift coefficient is a skin color shift coefficient. Moreover, the color of the target is the color of the skin. In other words, the corrected first color data obtained by applying the first color shift coefficient is closer to the color of the skin. It should be noted that since the skin itself has a light absorbing property, the true color of the skin is failed to be obtained without correcting with the first color shift coefficient. The generation method of the first color shift coefficient may be obtained by, for example, collecting skin color data of different countries, different regions, and different races for analysis. How to analyze according to the color data to obtain the color shift coefficient is acquired by conventional arts, which shall not be repeated herein. It should be noted that, the kind of the first color shift coefficient and the color of the target are not limited by the invention.

In one embodiment, the second electronic device 120 may further correct the aforementioned first color data according to the second color shift coefficient to expand a color domain of the first color data toward a direction (e.g., outward) adjacent to the color domain in Step S211. The second color shift coefficient is, for example, a cosmetics palette correction coefficient, which is used to make the skin color of a person in the image close to the color of a certain cosmetics. The second color shift coefficient is, for example, obtained by analyzing the color data of the cosmetics. How the color shift coefficient is obtained according to the color data may be acquired according to conventional arts, which shall not be repeated herein.

In particular, in this embodiment, the first color data is expressed in the form of a waveform, and the first color data includes, for example, red, green, blue, and a clean value. The second color data is expressed as a numerical value, which is illustrated as red, green, blue, and the clean value. The value range is, for example, between 0 and 255. Besides, the aforementioned color domain in Step is a RGB color domain. However, the kind of the color domain in Step S211 is not limited in this invention.

Lastly, please further refer to FIG. 2. The display 32 of the second electronic device 120 displays the subject according to the second color data (Step S213).

In summary of the above, the image displaying system and method of the invention automatically increases the brightness of the fill light when the illuminance of the subject is not enough. Furthermore, in the processing of the image correction, the color fate is corrected according to the color shift coefficient so that the corrected first color data is close to a color of a target related to the first color shift coefficient. For instance, the corrected first color data is closer to the true skin color or the color of cosmetics. In view of the above, the error caused by manufacturing of the RGB sensor may be reduced, and by correcting the color shift coefficient, the influence of the surface material may be reduced to obtain the more accurate RGB color domain.

## Claims

1. An image displaying system (1000), comprising:
a first electronic device (100), comprising an image capturing circuit (22); and
a second electronic device (120), comprising a display (32), wherein
the first electronic device (100) activates a fill light to fill a subject,
the first electronic device (100) determines whether an illuminance of the subject is greater than a first threshold,
when the illuminance of the subject is not greater than the first threshold, the first electronic device (100) increases a brightness of the fill light, and repeatedly performs the operation of determining whether the illuminance of the subject is greater than the first threshold,
when the illuminance of the subject is greater than the first threshold, the first electronic device (100) captures the subject by the image capturing circuit (22) to obtain a first color data, and transmits the first color data to the second electronic device (120),
the second electronic device (120) corrects the first color data, and converts the corrected first color data into second color data in a color domain, and displays the subject according to the second color data.

2. The image displaying system (1000) according to claim 1, wherein in the operation of correcting the first color data,
the second electronic device (120) corrects the first color data according to a first correcting parameter related to a sensing range of the image capturing circuit (22) so that the corrected first color data is close to a color range of a color card.

3. The image displaying system (1000) according to claim 2, wherein before the operation of correcting the first color data,
the second electronic device (120) acquires the sensing range of the image capturing circuit (22) from the first electronic device (100),
the second electronic device (120) acquires the first correcting parameter according to the sensing range.

4. The image displaying system (1000) according to claim 1, wherein in the operation of correcting the first color data,
the second electronic device (120) corrects the first color data according to a first color shift coefficient so that the corrected first color data is close to a color of a target related to the first color shift coefficient.

5. The image displaying system (1000) according to claim 4, wherein the first color shift coefficient is a skin color shift coefficient, and the color of the target is the color of the skin.

6. The image displaying system (1000) according to claim 1, wherein in the operation of correcting the first color data,
the second electronic device (120) corrects the first color data according to a second color shift coefficient to expand a color domain of the first color data toward a direction adjacent to the color domain.

7. The image displaying system (1000) according to claim 6, wherein the second color shift coefficient is a palette correction coefficient.

8. An image displaying method, for an image displaying system (1000), the image displaying system (1000) comprising a first electronic device (100) and a second electronic device (120), the first electronic device (100) comprising an image capturing circuit (22), the second electronic device (120) comprising a display (32), the method comprising:
activating a fill light by the first electronic device (100) to fill a subject;
determining whether a illuminance of the subject is greater than a first threshold by the first electronic device (100);
increasing a brightness of the fill light by the first electronic device (100) when the illuminance of the subject is not greater than the first threshold, and repeatedly performing the step of determining whether the illuminance of the subject is greater than the first threshold;
capturing the subject to obtain a first color data by the image capturing circuit (22) of the first electronic device (100) when the illuminance of the subject is greater than the first threshold, and transmitting the first color data to a second electronic device (120) by the first electronic device (100); and
converting the corrected first color data to a second color data in a color domain by the second electronic device (120) correcting the first color data, and displaying the subject according to the second color data.

9. The image displaying method according to claim 8, wherein in the operation of correcting the first color data,
the second electronic device (120) corrects the first color data according to a first correcting parameter related to a sensing range of the image capturing circuit (22) so that the corrected first color data is close to a color range of a color card.

10. The image displaying method according to claim 9, wherein before the operation of correcting the first color data, the method further comprises:
acquiring the sensing range of the image capturing circuit (22) by the second electronic device (120) from the first electronic device (100); and
acquiring the first correcting parameter by the second electronic device (120) according to the sensing range.

11. The image displaying method according to claim 8, wherein a step of correcting the first color data comprises:
correcting the first color data according to a first color shift coefficient by the second electronic device (120) so that the corrected first color data is close to a color of a target related to the first color shift coefficient.

12. The image displaying method according to claim 11, wherein the first color shift coefficient is a skin color shift coefficient, and the color of the target is the color of the skin.

13. The image displaying method according to claim 8, wherein a step of correcting the first color data comprises:
correcting the first color data according to a second color shift coefficient by the second electronic device (120) to expand a color domain of the first color data toward a direction adjacent to the color domain.

14. The image displaying method according to claim 13, wherein the second color shift coefficient is a palette correction coefficient.

15. The image displaying method according to claim 8, wherein the first color data is expressed in the form of a waveform, and the second color data is expressed as a numerical value.
